# EUROPÄISCHE PATENTSCHRIFT

(11) **EP 0 655 593 B1**
(45) Veröffentlichungstag und Bekanntmachung des Hinweises auf die Patenterteilung: **08.07.1998**
(21) Anmeldenummer: 94116767.8
(22) Anmeldetag: 25.10.1994
(51) Int. Cl.: F25D 17/02, B64D 11/04

(54) **Flugzeug mit einem Kühlsystem zur Kühlung von Lebensmitteln**
Aircraft with a cooling system for cooling of foodstuffs
Avion avec un système de refroidissement pour le refroidissement des produits alimentaires

(30) Priorität: 26.11.1993 DE 4340317
(43) Veröffentlichungstag der Anmeldung: 31.05.1995
(73) Patentinhaber: Daimler-Benz Aerospace Airbus Gesellschaft mit beschränkter Haftung, 21129 Hamburg (DE)
(72) Erfinder: Fischer, Heinz, D-24558 Henstedt-Ulzburg (DE); Fischer, Jürgen, D-21149 Hamburg (DE); Scherer, Thomas, Dr., D-22587 Hamburg (DE)
(74) Vertreter: Hansmann, Dierk, Dipl.-Ing.

(56) Entgegenhaltungen:
- DE-A- 1 601 899
- DE-A- 1 950 520
- DE-A- 2 546 812
- FR-A- 2 689 222
- US-A- 5 253 484
- Technische Rundschau,Bd. 63, Nr. 51, 3.12.71, Seite 31, Fugtechnik: Bordküchen für die Boeing 747

## Beschreibung

Die Erfindung betrifft ein Flugzeug mit einem Kühlsystem zur Kühlung von Lebensmitteln gemäß dem Oberbegriff von Anspruch 1.

Zur Versorgung der Passagiere im Luftverkehr werden Speisen und Getränke angeboten, die in Transportbehältern, sogenannten Trolleys, kühl gelagert und in den meisten Fällen daraus serviert werden. Sie werden im Flugzeug in einer Bordküche abgestellt und mit entsprechenden Einrichtungen weitergekühlt. Die Anzahl der in einem Flugzeug vorgesehenen Bordküchen bzw. Stellplätze für Transportbehälter ist im wesentlichen von der Passagieranzahl und dem Einsatzzweck des Flugzeuges, beispielsweise für Langstrecken, abhängig. Die Bordküchen sind üblicherweise an unterschiedlichen Standorten innerhalb des Kabinenraumes im Flugzeug in der Weise angeordnet, daß eine Verteilung der Speisen und Getränke an die Passagiere in kürzester Zeit und mit kürzesten Transportwegen realisiert wird.

Eine solche Lösung ist beispielsweise aus dem Dokument D2 (Zeitschrift "Technische Rundschau", Bd. 63, Nr. 51, 3. Dezember 1971, S. 30, 31) bekannt.

Für jede Bordküche ist es üblich, eine autarke, mit Kaltluft als Kühlmedium arbeitende Einrichtung mit einer eigenen Kompressionskältemaschine (Air-Chiller) zur Verfügung zu haben. Eine solche Lösung ist aus der DE-A-41 05 034 bekannt.

Die FR-A-2689222 zeigt ebenfalls, daß mehrere Transportbehälter für Lebensmittel auf nebeneinander angeordneten Stellplätzen abgestellt werden können, beispielsweise innerhalb einer Bordküche, und von einem gemeinsamen Kühlaggregat mit Kälte versorgt werden.

Demnach sind die zu kühlenden Transportbehälter in den Bordküchen jeweils in örtlicher Nähe zu den Kälteerzeugungseinrichtungen angeordnet. Die Kälteerzeugungseinrichtung und die dazugehörigen Rohrleitungen sind für jede Bordküche in deren Nähe fest installiert, was einen hohen Platzbedarf in der Flugzeugkabine verursacht und darüber hinaus zusätzliche Wärmelasten und Geräusche im Kabinenraum erzeugt. Eine flexible Anordnung der Bordküchen im Kabinenraum und damit ein schnelles Anpassen an verschiedene Einsatzzwecke ist aufgrund des hohen Platzbedarfes der Kälteerzeugungseinrichtungen ebenfalls nicht möglich.

Demgemäß liegt der Erfindung die Aufgabe zugrunde, ein gattungsgemäßes Flugzeug mit einem Kühlsystem derart auszubilden, daß eine flexible Anordnung der Bordküchen innerhalb der Flugzeugkabine ermöglicht wird, um eine schnelle Anpassung an verschiedene Einsatzzwecke zu ermöglichen und gleichzeitig der Platz- und Installationsaufwand für die Bordküchen zu minimieren.

Diese Aufgabe ist bei einem gattungsgemäßen Flugzeug mit einem Kühlsystem durch die Merkmale von Anspruch 1 gelöst.

Insbesondere ist vorteilhaft, daß mit einer zentralen Kälteerzeugungseinrichtung alle im Flugzeug vorhandenen Bordküchen mit der erforderlichen Kühlleistung versorgt werden und nur eine zentrale Kälteerzeugungseinrichtung zu installieren ist, wodurch der Installationsaufwand erheblich reduziert wird und in den Bordküchen eine erhebliche Platz-und Gewichtseinsparung erreicht wird.
Weiterhin ist von Vorteil, daß eine schnelle Anpassung an Änderungen des Kabinenlayouts ermöglicht wird und damit auf Wünsche der Fluggesellschaften flexibel reagiert werden kann.

Weiterbildungen und zweckmäßige Ausgestaltungen sind in den Unteransprüchen 2 bis 10 angegeben.

Mit einer Anordnung der Kälteerzeugungseinrichtung außerhalb des Kabinenraumes gemäß Anspruch 2 ist es möglich, dort vorhandene Wärmesenken zum Abtransport anfallender Wärme auszunutzen. Alternativ dazu kann die Wärme nach außenbords abgeführt werden. Im Kabinenraum selbst werden keine zusätzlichen Wärmelasten und Geräusche erzeugt, was den Reisekomfort erhöht.

Mit den Maßnahmen nach Anspruch 3 und 4 ist für eine flexible Anordnung der Bordküchen und damit für eine schnelle Änderung des Kabinenlayouts eine vorteilhafte Weiterbildung genannt. Für Änderungen der Anordnung der Bordküchen innerhalb der Flugzeugkabine ist keine weitere Rohrleitungsverlegung notwendig. Schnellkupplungen an den Stichleitungen, die die Verbindung zwischen Bordküche und Verteilsystem herstellen, können an entsprechende Adapter in der Zuführleitung und Rückführleitung angeschlossen werden und damit leckagefreie Verbindungen schaffen. Diese Adapter sind von vornherein in der Zuführ- und Rückführleitung so vorgesehen, daß variable Anschlußmöglichkeiten der Bordküchen an potentiellen Bordküchenpositionen bestehen.

Gemäß Anspruch 5 ist das Verteilsystem aus Kälteträgerleitungen gebildet, die einen flüssigen Kälteträger, vorzugsweise ein Wasser/Glycol-Gemisch, in Rohrleitungen mit relativ geringem Durchmesser zu den in den Bordküchen angeordneten Wärmetauscheinrichtungen transportieren, vorzugsweise zu Flüssigkeits/Luftwärmetauscher mit einem Ventilator.

Eine vorteilhafte Ausbildung der Kälteerzeugungseinrichtung gemäß Anspruch 6 ist mit einer Kompressionskältemaschine realisiert.

Um die niedrige Umgebungstemperatur während des Fluges zu nutzen und die Redundanz zu erhöhen, ist in einer alternativen Ausgestaltung nach Anspruch 7 die Kälteerzeugungseinrichtung mit einem Hautwärmetauscher an der Flugzeugaußenhaut kombiniert.

Um schon vorhandene Systeme im Flugzeug wie beispielsweise das Klimasystem zu nutzen, ist gemäß Anspruch 8 die Kälteerzeugungseinrichtung als ein Flüssigkeits/Luftwärmetauscher ausgebildet ist, wobei ein Luftstrom des Klimasystems den Flüssigkeits/Luftwärmetauscher durchströmt und damit der Kälteträgerflüssigkeit im Verteilsystem Wärme entzogen wird.

In einer Ausgestaltung gemäß Anspruch 9 ist die Kälteerzeugungseinrichtung als Sorptionseinrichtung ausgebildet, wobei die Zuführleitung als eine Kältemittelflüssigkeitsleitung ausgebildet ist, die mit den als Verdampfüngseinrichtungen ausgebildeten Wärmetauscheinrichtungen verbunden ist, und die Rückführleitung als Kältemitteldampfleitung vorgesehen ist.

Mit der Maßnahme nach Anspruch 10 ist ein reibungsloser Transport des Kühlmediums im Verteilsystem gewährleistet.

Die Erfindung wird nachstehend beschrieben und anhand der Figuren 1 bis 3 näher erläutert.

Es zeigen:
- Fig. 1: eine Übersichtsdarstellung eines Kühlsystems zur Kühlung von Lebensmitteln in einem Flugzeug,
- Fig. 2: das Kühlsystem zur Kühlung von Lebensmitteln mit einer Ausgestaltung des Leitungssystems als Kälteträgerleitungssystem und
- Fig. 3: das Kühlsystem zur Kühlung von Lebensmitteln mit einer Ausgestaltung des Leitungssystems als Kältemittelleitungssystem.

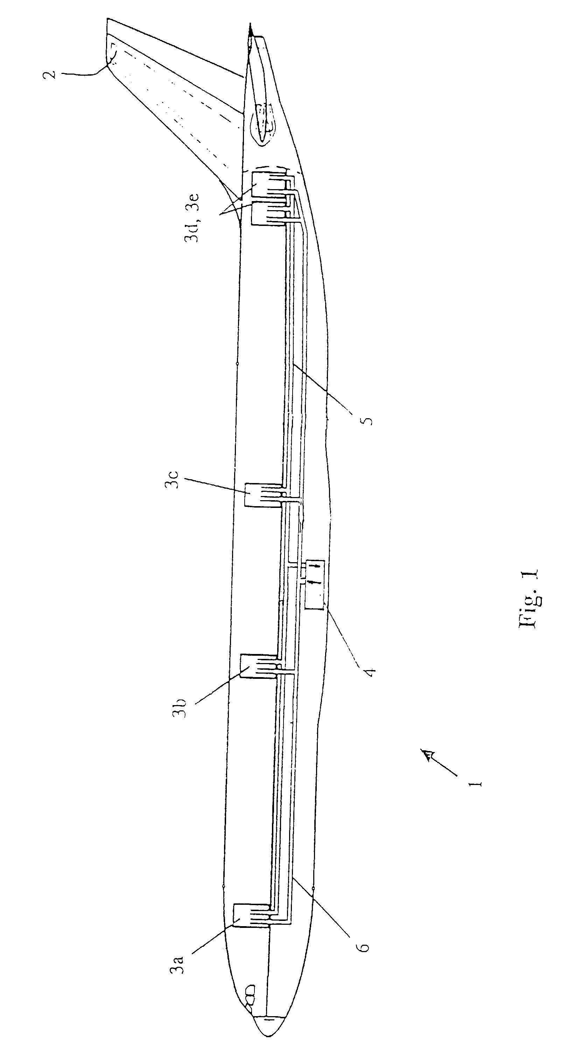

Die Fig. 1 zeigt ein Kühlsystem zur Kühlung von Lebensmitteln 1 in einem Flugzeug 2 in einer Übersichtsdarstellung. Die Lebensmittel sind in üblicherweise bekannten Transportbehältern gelagert, die innerhalb des Flugzeuges vorgegebene Stellplätze, in innerhalb des Kabinenraumes befindlichen Bordküchen 3a bis 3e einnehmen. Ausgehend von einer zentralen Kälteerzeugungseinrichtung 4, die, vorzugsweise außerhalb des Kabinenraumes, im Unterflurbereich angeordnet ist, wird über ein aus einer Zuführleitung 5 und einer Rückführleitung 6 bestehendes Verteilsystem jede der Bordküchen 3a bis 3e mit Kühlenergie versorgt. Die Zuführ- und die Rückführleitung 5 und 6 führen das Kühlmedium, beispielsweise einen flüssigen Kälteträger oder ein Kältemittel, zum jeweiligen Verbraucher zu- und wieder ab. Das Verteilsystem ist vorzugsweise weitgehend im gesamten Flugzeugkabinenbereich in Nähe des Fußbodens vorgesehen, vorzugsweise unterhalb des Fußbodens und außerhalb der Flugzeugkabine.
Die Kälteerzeugungseinrichtung 4 umfaßt hier jede Einrichtung zur Erzeugung von Kälte. An den Leitungsenden der Zuführleitung 5 und Rückführleitung 6 bzw. an den am Verteilsystem angeschlossenen Stichleitungen sind innerhalb der Bordküchen 3a bis 3e Wärmetauscheinrichtungen vorgesehen, an denen ein Kälteträger eines Sekundärkreislaufes Wärme abgeben kann und sich abkühlt.

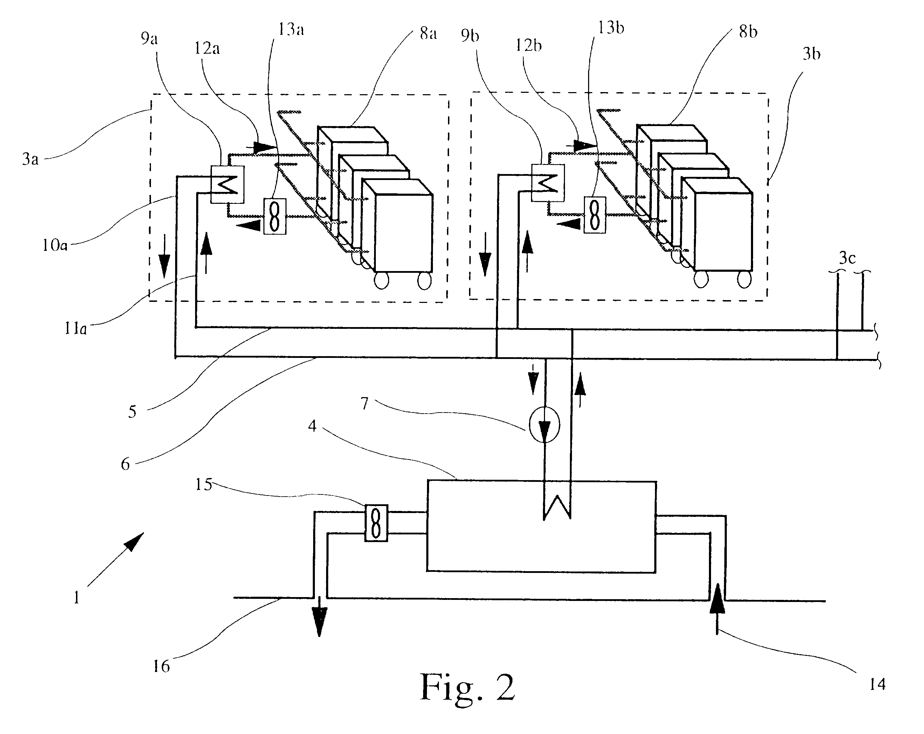

Dieser Kälteträger überträgt die aufgenommene Kühlenergie auf die in den Transportbehältern gelagerten Lebensmittel. Auf eine mögliche Ausführung des Sekundärkreislaufes wird in der Beschreibung der Fig. 2 näher eingegangen.

Mit diesem Kühlsystem ist es möglich, mit nur einer zentralen Kälteerzeugungseinrichtung 4 die gesamte in einem Flugzeug benötigte Kühlleistung zur Kühlung von Lebensmitteln in den Bordküchen 3a bis 3e zur Verfügung zu stellen.

Eine Darstellung des Kühlsystems 1 mit einer Ausgestaltung des Leitungssystems als ein Kälteträgerleitungssystem ist in Fig. 2 ersichtlich und nachfolgend dargestellt.

Das Verteilsystem wird von der zentralen Kälteerzeugungseinrichtung 4 gespeist und besteht im wesentlichen aus Kälteträgerleitungen, die aus einer Zuführleitung 5 und einer Rückführleitung 6 bestehen, und Stichleitungen 10a,10b und 11a, 11b zur jeweiligen Wärmetauscheinrichtung 9a bzw. 9b, die innerhalb der Bordküchen 3a bzw. 3b angeordnet sind. Die Kälteträgerleitungen für den Transport eines flüssigen Kälteträgers, vorzugsweise eines Wasser/Glykol-Gemisches, haben einen relativ geringen Durchmesser, was vorteilhaft für die Leitungsverlegung ist. Die Stichleitungen 10a, 10b und 11a, 11b sind vorzugsweise mit Schnellkupplungen versehen, die an der Zuführleitung 5 und an der Rückführleitung 6 möglichst leckagefrei angeschlossen werden können. So sind an potentiellen Bordküchenpositionen Adapter zum Anschluß der Schnellkupplungen in der Zuführleitung 5 und in der Rückführleitung 6 vorgesehen.

Aus Gründen der Übersichtlichkeit sind nur die Bordküchen 3a und 3b genauer dargestellt. Für die anderen Küchen, die gleichfalls an die Kälteträgerleitungen 5, 6 angeschlossen sind, ist die Anordnung identisch.
Die Kälteerzeugungseinrichtung 4 dient zur Erzeugung der erforderlichen Kühlleistung für die im Flugzeug vorhandenen Bordküchen 3a - 3e. In einer bevorzugten Ausgestaltung ist die benötigte Kälteleistung mittels einer Regeleinheit an der Kälteerzeugungseinrichtung so regelbar, daß an allen Wärmetauscheinrichtungen ausreichend Kälte zur Verfügung steht und dabei beispielsweise auf Temperaturschwankungen im Kabinenraum bzw. am Kühlgut und/oder auf Position und Anzahl der Transportbehälter reagiert wird.

Die Kälteerzeugungseinrichtung 4 ist in der dargestellten Form eine Kompressionskältemaschine, die eine im Verteilsystem zirkulierende Kälteträgerflüssigkeit, beispielsweise ein Wasser/Glykol-Gemisch, mit ausreichend Kühlenergie versorgt. Die Kondensatorabwärme der Kompressionskältemaschine 4 wird über einen Kühlluftstrom an die Umgebung abgegeben. Als Kühlluft ist beispielsweise Außenluft 14 verwendbar, die durch die Flugzeugaußenhaut 16 zugeführt und nach außen wieder abgeführt wird. Der Luftstrom wird bedarfsweise mit einem Gebläse 15 erzeugt.

Als Kühlluft ist in einer weiteren Ausführung im Flugzeug vorhandene Abluft, beispielsweise Frachtraum- und/oder Kabinenabluft nutzbar.

In einer nicht dargestellten Ausführung ist die Kälteerzeugungseinrichtung 4 als ein Hautwärmetauscher an der Flugzeug-Außenhaut möglich. Eine Kombination von Hautwärmetauscher und einem anderen Kühlgerät ist sinnvoll, um auch eine Kühlung der Lebensmittel bei nicht ausreichenden Außentemperaturen zu gewährleisten.

Eine weitere Ausbildung der Kälteerzeugungseinrichtung 4 ist ein Flüssigkeits/Luftwärmetauscher, an dem der Kälteträgerflüssigkeit im Verteilsystem Wärme entzogen wird. Der Wärmetauscher wird von einem Luftstrom eines Klimasystems des Flugzeuges durchströmt, der eine ausreichende Wärmeabfuhr gewährleistet. Bedarfsweise ist eine Kombination mit einem zusätzlichen Kühlgerät möglich, um die Kühlleistung zu erhöhen. Aus Redundanzgründen ist eine Kombination von Kälteerzeugungseinrichtungen 4 der verschiedenen genannten Arten ebenfalls möglich.

Ausgehend von der Kälteerzeugungseinrichtung 4 wird die Kälteträgerflüssigkeit durch die weitgehend durch das gesamte Flugzeug verlaufenden Zuführleitung 5 und durch die Stichleitung 11a, 11b zur jeweiligen Wärmetauscheinrichtung 9a, 9b transportiert. Je nach Anzahl der im Flugzeug vorhandenen Bordküchen 3 führen die Stichleitungen 10 und 11 zu jeder Wärmetauscheinrichtung 9. An der als Flüssigkeits/Luftwärmetauscher ausgebildeten Wärmetauscheinrichtung 9a, 9b nimmt ein als ein Kühlluftkreislauf 12a, 12b ausgebildeter Sekundärkreislauf Kühlenergie auf und gibt sie an den zu kühlenden Transportbehältern 8a, 8b wieder ab. Der Luftstrom wird mit einem Gebläse 13a, 13b erzeugt.

Falls in den Bordküchen 3a, 3b keine Kühlung notwendig ist, da beispielsweise keine Transportbehälter 8a, 8b auf ihren Stellplätzen stehen, kann mittels des Gebläses 13a, 13b der Kühlluftkreislauf 12a, 12b abgeschaltet werden.

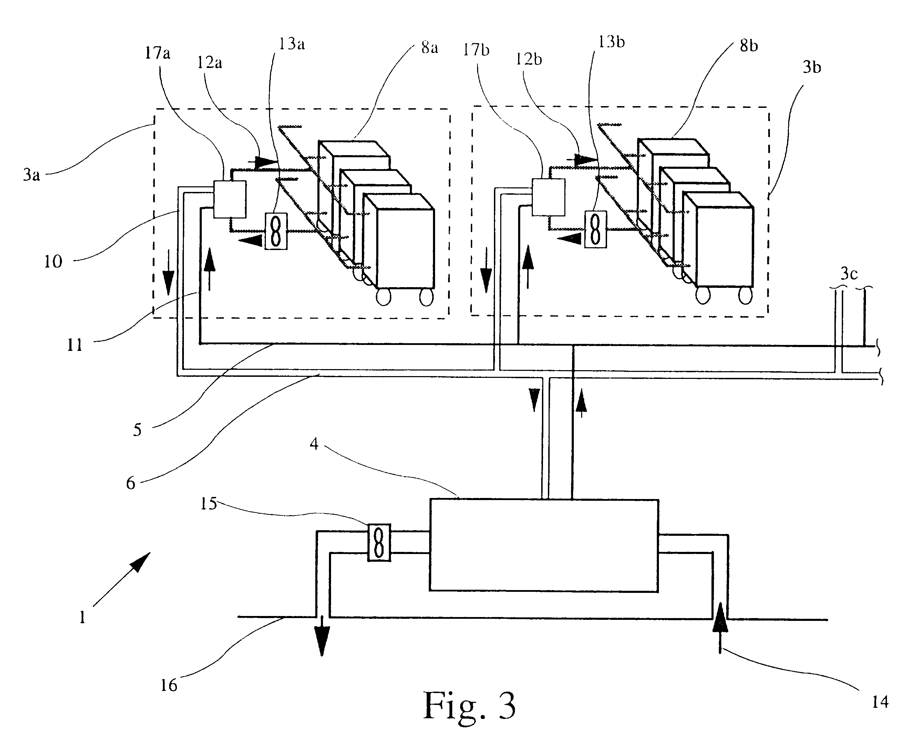

In Fig. 3 ist das Kühlsystem zur Kühlung von Lebensmitteln mit einer Ausgestaltung des Leitungssystems als Kältemittelleitungssystem gezeigt.
Der prinzipielle Aufbau ähnelt der in Fig. 2 gezeigten Ausgestaltung. Die Kälteerzeugungseinrichtung 4 ist als eine Kompressionskältemaschine ausgebildet, wobei eine notwendige Verdampfungseinrichtung 17a, 17b nicht innerhalb der Kälteerzeugungseinrichtung 4 angeordnet ist, sondern am jeweiligen Verbraucher plaziert ist. Die Verdampfungseinrichtung 17a, 17b, die einen Verdampfer und ein dazugehöriges Durchflußmengenventil beinhaltet, erhält über die als Kältemittelflüssigkeitsleitungen ausgebildeten Zuführleitung 5 und Stichleitung 11 das flüssige Kältemittel und ist über die als Kältemitteldampfleitungen ausgebildeten Rückführleitung 6 und Stichleitung 10 mit den restlichen Teilen der Kompressionskältemaschine verbunden, in der der Kältemitteldampf verdichtet und wieder verflüssigt wird. Der Transport des Kühlmittels ist mit dem Kompressor der Kompressionskältemaschine gewährleistet.

In einer alternativen Ausgestaltung ist die Kälteerzeugungseinrichtung 4 als eine Sorptionseinrichtung ausgebildet, wobei eine notwendige Verdampfungseinrichtung 17a, 17b nicht innerhalb der Kälteerzeugungseinrichtung 4 angeordnet ist, sondern am jeweiligen Verbraucher plaziert ist. Die Verdampfüngseinrichtung 17a, 17b, die einen Verdampfer und ein dazugehöriges Durchflußmengenventil beinhaltet, erhält über die als Kältemittelflüssigkeitsleitungen ausgebildeten Zuführleitung 5 und Stichleitung 11 das flüssige Kältemittel und ist über die als Kältemitteldampfleitungen ausgebildeten Rückführleitung 6 und Stichleitung 10 mit den restlichen Teilen der Sorptionseinrichtung verbunden. Der Transport des flüssigen Kühlmittels wird bedarfsweise mit einer Pumpe gewährleistet. Das verdampfte Kältemittel wird über die Kältemitteldampfleitungen zurück zur Sorptionseinrichtung mittels eines Sorptionsmittels gesaugt und dort adsorbiert.

Mit dieser Ausführung des Kühlsystems 1 kann unter Ausnutzung des üblicherweise vorhandenen Kühlluftkreislaufes 12a, 12b mit dem Kälteträger Luft als Sekundarkreislauf in den bestehenden Bordküchen ohne aufwendige Umbauten auf eine zentrale, vorzugsweise ohne FCKW arbeitende Kälteversorgung umgestellt werden.

### Bezugszeichenliste

- 1 -: Kühlsystem zur Kühlung von Lebensmitteln
- 2 -: Flugzeug
- 3a - 3e -: Bordküchen
- 4 -: zentrale Kälteerzeugungseinrichtung
- 5 -: Zuführleitung
- 6 -: Rückführleitung
- 7 -: Pumpe
- 8a,b -: Transportbehälter
- 9a,b -: Wärmetauscheinrichtung (Flüssigkeits/Luftwärmetauscher)
- 10 -: Stichleitung von der Bordküche
- 11 -: Stichleitung zur Bordküche
- 12a,b -: Kühlluft
- 13a,b -: Gebläse im Sekundärkreislauf
- 14 -: Außenluft
- 15 -: Gebläse
- 16 -: FZ-Außenhaut
- 17a,b -: Verdampfungseinrichtung

## Patentansprüche

1. Flugzeug mit einem Kühlsystem zur Kühlung von Lebensmitteln, wobei die Lebensmittel in üblicherweise bekannten Transportbehältern gelagert werden und die Transportbehälter vorgegebene Stellplätze einnehmen, wobei die Stellplätze in mehreren, in der Flugzeugkabine verteilten Bordküchen vorgesehen sind,
**dadurch gekennzeichnet, daß**
mindestens eine zentrale Kälteerzeugungseinrichtung (4) im Unterflurbereich des Flugzeuges angeordnet ist, die Kälteerzeugungseinrichtung (4) an ein aus Zuführleitung (5) und Rückführleitung (6) bestehendes Verteilsystem angeschlossen ist und die Zuführ- und Rückführleitung (5, 6) über Stichleitungen (10a, 10b, 11a, 11b) mit Wärmetauscheinrichtungen (9a, 9b, 17a, 17b) in den Bordküchen (3a bis 3e) verbunden sind.

2. Flugzeug mit einem Kühlsystem zur Kühlung von Lebensmitteln nach Anspruch 1,
**dadurch gekennzeichnet, daß**
die Kälteerzeugungseinrichtung (4) außerhalb der Flugzeugkabine angeordnet ist.

3. Flugzeug mit einem Kühlsystem zur Kühlung von Lebensmitteln nach einem der Ansprüche 1 oder 2,
**dadurch gekennzeichnet, daß**
das Verteilsystem (5, 6) weitgehend den gesamten Flugzeugkabinenbereich abdeckt und vorzugsweise im Fußbodenbereich verläuft.

4. Flugzeug mit einem Kühlsystem zur Kühlung von Lebensmitteln nach einem der Ansprüche 1 bis 3,
**dadurch gekennzeichnet, daß**
die Stichleitungen (10a, 10b, 11a, 11b) mit Schnellkupplungen versehen sind, die am Verteilsystem (5, 6) an variablen Positionen anschließbar sind.

5. Flugzeug mit einem Kühlsystem zur Kühlung von Lebensmitteln nach einem der Ansprüche 1 bis 4,
**dadurch gekennzeichnet, daß**
das Verteilsystem (5, 6) aus Kälteträgerleitungen für einen flüssigen Kälteträger besteht.

6. Flugzeug mit einem Kühlsystem zur Kühlung von Lebensmitteln nach einem der Ansprüche 1 bis 4,
**dadurch gekennzeichnet, daß**
die Kälteerzeugungseinrichtung (4) als Kompressionskältemaschine ausgebildet ist.

7. Flugzeug mit einem Kühlsystem zur Kühlung von Lebensmitteln nach den Ansprüchen 1 bis 4,
**dadurch gekennzeichnet, daß**
die Kälteerzeugungseinrichtung (4) bedarfsweise mit einem Hautwärmetauscher an der Flugzeugaußenhaut kombiniert ist.

8. Flugzeug mit einem Kühlsystem zur Kühlung von Lebensmitteln nach den Ansprüchen 1 bis 4,
**dadurch gekennzeichnet, daß**
die Kälteerzeugungseinrichtung (4) als ein Flüssigkeits/Luftwärmetauscher ausgebildet ist, wobei ein Luftstrom eines Klimasystems den Flüssigkeits/Luftwärmetauscher durchströmt und damit der Kälteträgerflüssigkeit im Verteilsystem Wärme entzogen wird.

9. Flugzeug mit einem Kühlsystem zur Kühlung von Lebensmitteln nach einem der Ansprüche 1 bis 4,
**dadurch gekennzeichnet, daß**
die Kälteerzeugungseinrichtung (4) als Sorptionseinrichtung ausgebildet ist und die Zuführleitung (5) als Kältemittelflüssigkeitsleitung ausgebildet ist, die mit den als Verdampfüngseinrichtungen (17a, 17b) ausgebildeten Wärmetauscheinrichtungen verbunden ist, und die Rückführleitung (6) als Kältemitteldampfleitung ausgebildet ist.

10. Flugzeug mit einem Kühlsystem zur Kühlung von Lebensmitteln nach einem der Ansprüche 1 bis 9,
**dadurch gekennzeichnet, daß**
innerhalb des Verteilsystems mindestens eine Pumpe zum Transport des Kühlmediums angeordnet ist.

## Claims

1. Aircraft having a cooling system for cooling foodstuffs, wherein the foodstuffs are stored in generally known transport containers and the transport containers adopt predetermined positioning locations, and wherein the positioning locations are provided in a number of galleys distributed within the aircraft cabin,
**characterised in that**
at least one central refrigerating apparatus (4) is disposed in the under-floor region of the aircraft, the refrigerating apparatus (4) is connected to a distributing system consisting of a feed line (5) and a return line (6), and the feed and return lines (5, 6) are connected, via branch lines (10a, 10b, 11a, 11b), to heat-exchanging apparatuses (9a, 9b, 17a, 17b) in the galleys (3a to 3e).

2. Aircraft having a cooling system for cooling foodstuffs, in accordance with claim 1,
**characterised in that**
the refrigerating apparatus (4) is disposed outside the aircraft cabin.

3. Aircraft having a cooling system for cooling foodstuffs, in accordance with one of claims 1 or 2,
**characterised in that**
the distributing system (5, 6) largely covers the entire aircraft cabin region and preferably extends in the floor region.

4. Aircraft having a cooling system for cooling foodstuffs, in accordance with one of claims 1 to 3,
**characterised in that**
the branch lines (10a, 10b, 11a, 11b) are provided with high-speed couplings which can be connected at variable positions on the distributing system (5, 6).

5. Aircraft having a cooling system for cooling foodstuffs, in accordance with one of claims 1 to 4,
**characterised in that**
the distributing system (5, 6) consists of refrigerating agent lines for a liquid refrigerating agent.

6. Aircraft having a cooling system for cooling foodstuffs, in accordance with one of claims 1 to 4,
**characterised in that**
the refrigerating apparatus (4) is constructed as a compression-type refrigerating machine.

7. Aircraft having a cooling system for cooling foodstuffs, in accordance with claims 1 to 4,
**characterised in that**
the refrigerating apparatus (4) is, if need be, combined with a skin heat-exchanger at the outer skin of the aircraft.

8. Aircraft having a cooling system for cooling foodstuffs, in accordance with claims 1 to 4,
**characterised in that**
the refrigerating apparatus (4) is constructed as a liquid/air heat-exchanger, wherein an air flow from an air-conditioning system flows through the liquid/air heat-exchanger and heat is thereby extracted from the refrigerating agent liquid in the distributing system.

9. Aircraft having a cooling system for cooling foodstuffs, in accordance with one of claims 1 to 4,
**characterised in that**
the refrigerating apparatus (4) is constructed as a sorption-type apparatus and the feed line (5) is constructed as a refrigerant liquid line which is connected to the heat-exchanging apparatuses constructed as evaporation apparatuses (17a, 17b), and the return line (6) is constructed as a refrigerant vapour line.

10. Aircraft having a cooling system for cooling foodstuffs, in accordance with one of claims 1 to 9,
**characterised in that**
at least one pump for transporting the cooling medium is disposed inside the distributing system.

## Revendications

1. Avion équipé d'un système de refroidissement destiné à refroidir des aliments, lesdits aliments étant disposés dans des conteneurs courants et lesdits conteneurs occupant une place déterminée, ces endroits étant prévus dans plusieurs cuisines de bord réparties dans la cabine de l'avion,
**caractérisé en ce que,**
au moins un dispositif de réfrigération central (4) est disposé dans l'espace sous le plancher de l'avion, en ce que le dispositif de réfrigération (4) est connecté à un système de distribution composé d'une conduite d'amenée (5) et d'une conduite de retour (6) et en ce que les conduites d'amenée et de retour (5, 6) sont connectées par l'intermédiaire de conduites de dérivation (10a, 10b, 11a, 11b) à des échangeurs thermiques (9a, 9b, 17a, 17b) dans les cuisines de bord (3a à 3e).

2. Avion équipé d'un système de refroidissement destiné à refroidir des aliments suivant la revendication 1,
**caractérisé en ce que,**
le dispositif de réfrigération (4) est disposé à l'extérieur de la cabine de l'avion.

3. Avion équipé d'un système de refroidissement destiné à refroidir des aliments suivant la revendication 1 ou 2,
**caractérisé en ce que,**
le système de distribution (5, 6) englobe largement toute la zone de la cabine de l'avion et s'étend préférentiellement dans la zone du plancher de la cabine.

4. Avion équipé d'un système de refroidissement destiné à refroidir des aliments suivant l'une ou l'autre des revendications 1 à 3,
**caractérisé en ce que,**
les conduites de dérivation (10a, 10b, 11a, 11b) sont pourvues de couplages rapides pouvant être connectés au système de distribution (5, 6) dans des positions variables.

5. Avion équipé d'un système de refroidissement destiné à refroidir des aliments suivant l'une ou l'autre des revendications 1 à 4,
**caractérisé en ce que,**
le système de distribution (5, 6) se compose de conduites à agent frigorigène pour un agent frigorigène liquide.

6. Avion équipé d'un système de refroidissement destiné à refroidir des aliments suivant l'une ou l'autre des revendications 1 à 4,
**caractérisé en ce que,**
le dispositif de réfrigération (4) est conçu comme un compresseur frigorifique.

7. Avion équipé d'un système de refroidissement destiné à refroidir des aliments suivant l'une ou l'autre des revendications 1 à 4,
**caractérisé en ce que,**
le dispositif de réfrigération (4) est combiné le cas échéant à un échangeur thermique de surface sur la surface externe du fuselage de l'avion.

8. Avion équipé d'un système de refroidissement destiné à refroidir des aliments suivant l'une ou l'autre des revendications 1 à 4,
**caractérisé en ce que,**
le dispositif de réfrigération (4) est conçu comme un échangeur thermique liquide/air, un courant d'air d'un système de conditionnement d'air traversant l'échangeur thermique liquide/air et la chaleur étant ainsi extraite du fluide frigorigène dans le système de distribution.

9. Avion équipé d'un système de refroidissement destiné à refroidir des aliments suivant l'une ou l'autre des revendications 1 à 4,
**caractérisé en ce que,**
le dispositif de réfrigération (4) est conçu comme un dispositif de sorption et en ce que la conduite d'amenée (5) est conçue comme une conduite à fluide frigorigène, qui est connectée aux échangeurs thermiques conçus comme des dispositifs d'évaporation (17a, 17b), et en ce que la conduite de retour (6) est conçue comme une conduite à vapeur frigorigène.

10. Avion équipé d'un système de refroidissement destiné à refroidir des aliments suivant l'une ou l'autre des revendications 1 à 9,
**caractérisé en ce que,**
à l'intérieur du système de distribution est au moins disposée une pompe destinée à transporter l'agent frigorigène.
